# EUROPÄISCHE PATENTSCHRIFT

(11) **EP 1 176 764 B1**
(45) Veröffentlichungstag und Bekanntmachung des Hinweises auf die Patenterteilung: **07.12.2005**
(21) Anmeldenummer: 01440218.4
(22) Anmeldetag: 12.07.2001
(51) Int. Cl.: H04L 12/46, H04L 12/42, H04L 12/437

(54) **Verfahren zum Betreiben eines Datenübertragungsnetzwerks**
Method of operating a data transmission network
Méthode de control d'un réseau de transmission de données

(30) Priorität: 26.07.2000 DE 10036222
(43) Veröffentlichungstag der Anmeldung: 30.01.2002
(73) Patentinhaber: ALCATEL, 75008 Paris (FR)
(72) Erfinder: Heuer, Volkmar, 71254 Ditzingen (DE)
(74) Vertreter: Rausch, Gabriele

(56) Entgegenhaltungen:
- ROLDAN J ET AL: "Application of dual-access architecture, with drop and continue feature, to WDM optical networks" TECHNOLOGY AND INFRASTRUCTURE, XX, XX, 23. Juni 1998 (1998-06-23), Seiten 259-266, XP002161771
- COLTRO C: "EVOLUTION OF TRANSPORT NETWORK ARCHITECTURES" ELECTRICAL COMMUNICATION, ALCATEL. BRUSSELS, BE, 1997, Seiten 10-18, XP000685828 ISSN: 0013-4252
- MORLEY G D ET AL: "Current approaches in the design of ring-based optical networks" ELECTRICAL AND COMPUTER ENGINEERING, 1999 IEEE CANADIAN CONFERENCE ON EDMONTON, ALTA., CANADA 9-12 MAY 1999, PISCATAWAY, NJ, USA,IEEE, US, 9. Mai 1999 (1999-05-09), Seiten 220-225, XP010359832 ISBN: 0-7803-5579-2

## Beschreibung

### Stand der Technik

Die Erfindung geht aus von einem Verfahren zum Betreiben eines Datenübertragungsnetzwerks, das mindestens zwei äußere Ringe und einen mittleren Ring aufweist, die über Knoten miteinander gekoppelt sind, wobei einer der Knoten einen zentralen Knoten für alle drei Ringe darstellt, und wobei in jedem der Knoten Schalteinrichtungen zur Herstellung von Verbindungen enthalten sind.

Ein derartiges Datenübertragungsnetzwerk ist allgemein bekannt und stellt letztlich eine Anordnung der Ringe in verschiedenen Richtungen, also "übers Eck" dar. Soll bei diesem Datenübertragungsnetzwerk eine Verbindung von dem einen der beiden äußeren Ringe zu dem anderen äußeren Ring hergestellt werden, so wird diese Verbindung in zwei Teilverbindungen aufgeteilt. Die eine Teilverbindung erstreckt sich von dem einen der beiden äußeren Ringe zu dem mittleren Ring und die andere Teilverbindung von dem mittleren Ring zu dem anderen äußeren Ring. Die beiden Teilverbindungen sind damit in "verschiedene Richtungen" des Datenübertragungsnetzwerks gerichtet. Die beiden Teilverbindungen werden völlig unabhängig voneinander aufgebaut und betrieben und erfordern jeweils zwischen den Ringen angeordnete Knoten mit zugehörigen Schalteinrichtungen. Bei beiden Teilverbindungen werden unabhängig voneinander Vorkehrungen gegen möglicherweise in den Ringen auftretende Defekte getroffen.

Der Aufwand an Bauteilen, wie auch der Steuerungsaufwand ist bei dem vorstehend beschriebenen Betrieb des Datenübertragungsnetzwerks relativ hoch.

### Aufgabe und Vorteile der Erfindung

Aufgabe der Erfindung ist es, ein Verfahren zum Betreiben eines Datenübertragungsnetzwerks zu schaffen, das auch eine Verbindung "übers Eck" ermöglicht, ohne dass hierzu ein besonderer Aufwand erforderlich ist.

Diese Aufgabe wird bei einem Verfahren der eingangs genannten Art erfindungsgemäß dadurch gelöst, dass erkannt wird, dass eine Verbindung von dem einen äußeren Ring über den mittleren Ring zu dem anderen äußeren Ring hergestellt werden soll, und dass die Verbindung unter Berücksichtigung aller drei Ringe wie folgt hergestellt wird:
- in einem Startpunkt wird die Verbindung in zwei parallele Verbindungen aufgeteilt und über einen der beiden äußeren Ringe geführt,
- eine der beiden parallelen Verbindungen wird direkt über den zentralen Knoten zu dem anderen äußeren Ring geführt,
- die andere der beiden parallelen Verbindungen wird über den mittleren Ring zu dem anderen äußeren Ring geführt,
- in einem Endpunkt werden die beiden parallelen Verbindungen wieder vereint.

Im Unterschied zum Stand der Technik, bei dem immer nur zwei Ringe im Zusammenhang mit dem Aufbau einer Verbindung betrachtet werden, werden bei der Erfindung alle drei Ringe bei der Herstellung der Verbindung berücksichtigt. Dies eröffnet die Möglichkeit, die Verbindung von dem einen der beiden äußeren Ringe über den mittleren Ring zu dem anderen äußeren Ring derart aufzubauen, dass einerseits derselbe Schutz gegen mögliche Defekte in den drei Ringen vorhanden ist wie beim Stand der Technik, dass aber andererseits kein zusätzlicher Bauteile- oder Steuerungsaufwand für die Verbindung erforderlich ist.

Wesentlich ist, dass erfindungsgemäß in einem ersten Schritt erkannt wird, dass alle drei Ringe für die erwünschte Verbindung erforderlich sind, und dass dann in einem zweiten Schritt auch alle drei Ringe gemeinsam bei der Herstellung der Verbindung berücksichtigt werden. Allein durch diese Maßnahme wird die umständliche Vorgehensweise des Stands der Technik überwunden, bei der immer nur zwei Ringe bei der Herstellung einer Verbindung berücksichtigt werden.

Bei einer vorteilhaften Weiterbildung der Erfindung weist der mittlere Ring zwei zueinander parallele Verbindungen auf, wobei die Verbindung über eine der beiden parallelen Verbindungen hergestellt wird. Damit wird eine weitere Möglichkeit der Fehlerbehebung geschaffen. Bei diesem sogenannten Dual-Node-Ring-Coupling werden zwei Ringe über zwei getrennte Knoten miteinander verbunden. Ein Knoten kann dabei aus einem oder aus mehreren Netzelementen bestehen.

Erfindungsgemäß ist es vorteilhaft, den mittleren Ring auf diese Art und Weise zu realisieren.

Bei weiteren vorteilhaften Weiterbildungen der Erfindung wird mindestens einer der Ringe als Shared-Protection-Ring-Verbindung ausgebildet, wobei mindestens ein Ring und mindestens eine Shared-Protection-Ring-Verbindung miteinander kombiniert werden können. Damit ist es möglich, die Erfindung auch im Zusammenhang mit einer Shared-Protection-Ring-Verbindung anzuwenden.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

### Ausführungsbeispiele der Erfindung

- Figur 1: zeigt ein schematisches Blockschaltbild eines Ausführungsbeispiels eines erfindungsgemäßen Datenübertragungsnetzwerks,
- Figur 2: zeigt ein schematisches Blockschaltbild eines ersten Ausführungsbeispiels eines erfindungsgemäßen Verfahrens zum Betreiben des Datenübertragungsnetzwerks der Figur 1,
- Figur 3: zeigt das Blockschaltbild der Figur 2 in einer vereinfachten Darstellung,
- Figur 4: zeigt ein vereinfachtes schematisches Blockschaltbild eines zweiten Ausführungsbeispiels eines erfindungsgemäßen Verfahrens zum Betreiben eines Datenübertragungsnetzwerks,
- Figur 5: zeigt ein vereinfachtes schematisches Blockschaltbild eines dritten Ausführungsbeispiels eines erfindungsgemäßen Verfahrens zum Betreiben eines Datenübertragungsnetzwerks, und
- Figur 6: zeigt ein vereinfachtes schematisches Blockschaltbild eines vierten Ausführungsbeispiels eines erfindungsgemäßen Verfahrens zum Betreiben eines Datenübertragungsnetzwerks.

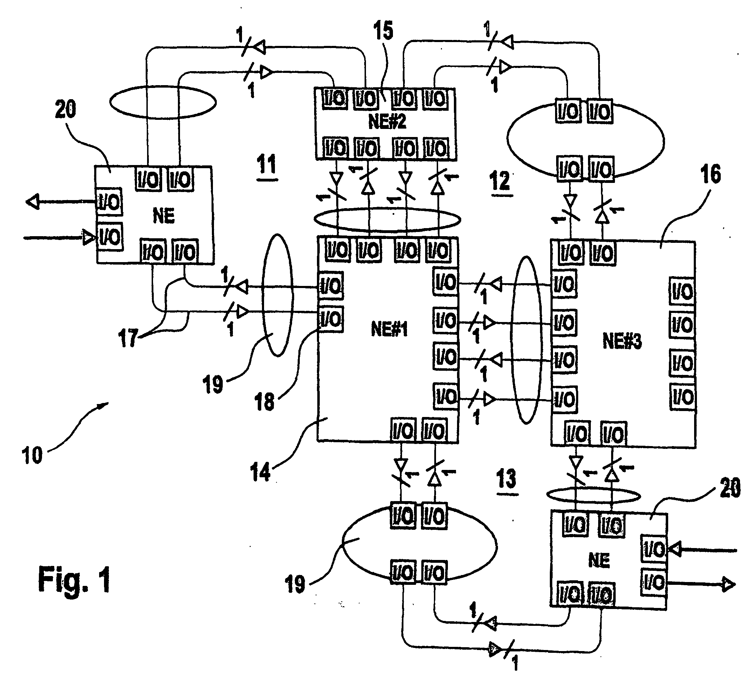

In der Figur 1 ist ein Datenübertragungsnetzwerk 10 im Hinblick auf seinen physikalischen Aufbau dargestellt. Das Datenübertragungsnetzwerk 10 weist drei Ringe 11, 12, 13 auf, die auch als Maschen ausgebildet sein können. Die Ringe 11, 12, 13 sind über Knoten 14, 15, 16 miteinander gekoppelt, die in der Figur 1 auch mit "NE#1", "NE#2" und "NE#3" bezeichnet sind (NE = Network Element).

Die Knoten 14, 15, 16 sind örtlich entfernt voneinander angeordnet. Die Verbindungen der Knoten 14, 15, 16 über die Ringe 11, 12, 13 sind über Kabel 17 realisiert, die an jeweils eine Eingangs- oder Ausgangskarte 18 der Knoten 14, 15, 16 angeschlossen sind. Die Eingangs- oder Ausgangskarten 18 sind auch als "I/O" bezeichnet (I/O = Input/Output). Die aufgrund der Eingangs- oder Ausgangskarten 18 festgelegten Übertragungsrichtungen der Kabel 17 sind in der Figur 1 mit Pfeilen gekennzeichnet.

Bei den Kabeln 17 kann es sich um Koaxialkabel, Glas- oder Kunststoffkabel oder Lambda-Kabel handeln. Ebenfalls ist es möglich, daß anstelle der Kabel 17 kabellose Verbindungen, also z.B. funkbasierte Übertragungsstrecken vorhanden sind.

In den Ringen 11, 12, 13 können weitere Netzwerke 19 enthalten sein, die über weitere Eingangs- oder Ausgangskarten 18 eingebunden sind. Ebenfalls können die Knoten 14, 15, 16 mit weiteren Eingangs- oder Ausgangskarten 18 versehen, an die weitere Kabel 17 angeschlossen werden können.

Die Ringe 11, 13 sind mit weiteren Knoten 20 versehen, über die ein Signal in beide Richtungen einkoppelbar ist. Dies ist in der Figur 1 durch Pfeile dargestellt. Die Knoten 20 sind auch als "NE" bezeichnet. Das Signal soll über das in der Figur 1 dargestellte Datenübertragungsnetzwerk 10 übertragen werden, wobei das Signal von dem Ring 11 zu dem Ring 13 und umgekehrt von dem Ring 13 zu dem Ring 11 übertragen werden soll.

Die Knoten 14, 15, 16, 20 zeichnen sich dadurch aus, dass über sie beliebige einfache oder komplexe Verbindungen zwischen den Eingangs- oder Ausgangskarten 18 geschaltet werden können. Dabei gibt es einfache unidirektionale oder bidirektionale Verbindungen, als auch komplexe Verbindungen, wie z.B. sogenannte Broadcast-Verbindungen oder sogenannte Sub-Network-Connection-Protection-Verbindungen, die jeweils mit beliebigen Eingangs- oder Ausgangskarten 18 verbunden werden können. Die Verbindungen können dabei mit Hilfe einer in jedem der Knoten 14, 15, 16, 20 vorhandenen Schaltmatrix aufgebaut werden. Die Schaltmatrizen werden von einem Steuergerät angesteuert, das die Schaltmatrizen in die für die jeweils erwünschten Verbindungen erforderlichen Schaltstellungen umschaltet. Das Steuergerät enthält dabei jeweils ein Rechengerät, das die erforderlichen Schaltstellungen mit Hilfe eines Programms ermittelt.

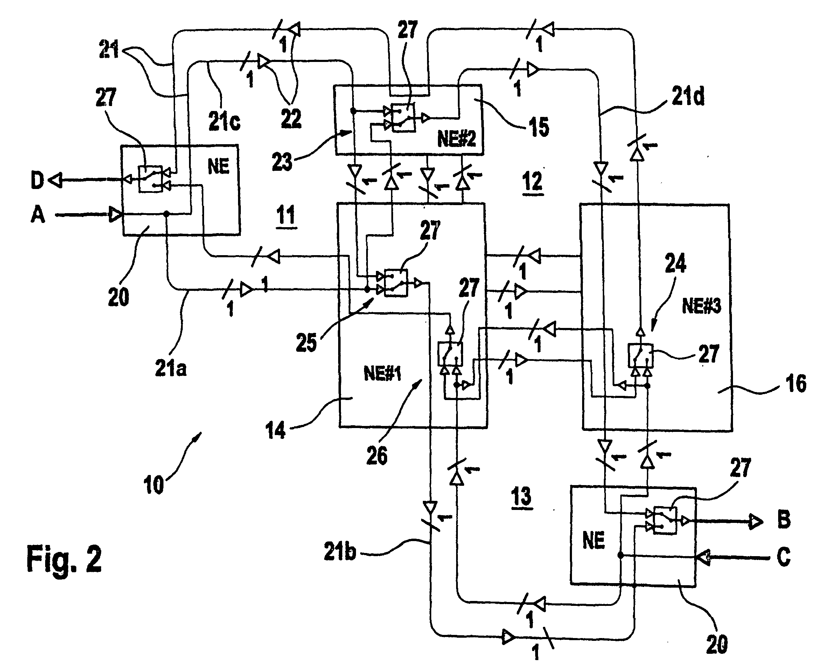

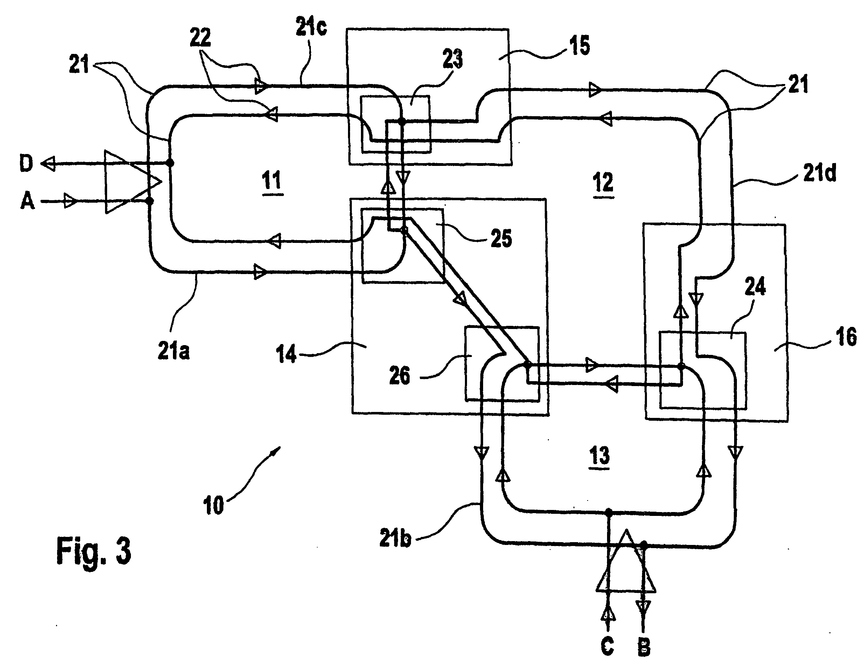

In den Figuren 2 und 3 ist das Datenübertragungsnetzwerk 10 im Hinblick auf seinen logischen Aufbau dargestellt. In der Figur 2 sind die Knoten 14, 15, 16, 20 detailliert dargestellt, während dies in der Figur 3 nur vereinfacht der Fall ist.

Bei dem Datenübertragungsnetzwerk 10 kann es sich um ein digitales Netzwerk, z.B. ein ATM- oder ein IP- oder ein SDH/SONET-Netzwerk handeln. Das Datenübertragungsnetzwerk 10 kann jedoch auch als optisches Netzwerk realisiert sein.

Wie in der Figur 1 dargestellt, sind die Knoten 14, 15, 16 über die Kabel 17 miteinander gekoppelt. In den Figuren 2 und 3 sind jedoch nicht diese Kabel dargestellt, sondern logische Verbindungen 21, die über die Kabel hergestellt werden können. Die logischen Verbindungen 21 sind dabei mit Pfeilen 22 versehen, die die Richtung der Datenübertragung auf der jeweiligen logischen Verbindung 21 angeben.

Der Knoten 15 verbindet die beiden Ringe 11, 12 miteinander. Der Knoten 15 enthält zu diesem Zweck eine Schalteinrichtung 23. Der Knoten 16 verbindet die beiden Ringe 12, 13 miteinander und enthält zu diesem Zweck eine Schalteinrichtung 24. Der Knoten 14 koppelt alle drei Ringe 11, 12, 13 miteinander und stellt damit einen zentralen Knoten dar. Der Knoten 14 enthält zu diesem Zweck zwei Schalteinrichtungen 25, 26. Die Schalteinrichtungen 23, 24, 25, 26 sind in der Figur 3 dargestellt.

Die Schalteinrichtungen 23, 24, 25, 26 sind alle gleichartig aufgebaut und werden auch als "Drop-and-Continue-Schaltung" bezeichnet, die auch als D&C abgekürzt wird. Jede der Schalteinrichtungen 23, 24, 25, 26 weist drei Paare von Verbindungen auf mit jeweils einer ankommenden und einer abgehenden Verbindung. Weiterhin enthält jede der Schalteinrichtungen 23, 24, 25, 26 einerseits einen Schalter 27, mit dem eine der abgehenden Verbindungen zwischen zwei der ankommenden Verbindungen hin- und hergeschaltet werden kann, sowie andererseits eine Verzweigung bzw. einen sogenannten Broadcast, mit dem eine ankommende Verbindung an zwei abgehende Verbindungen verteilt wird. Die Schalter 27 sind in der Figur 2 dargestellt.

Mit den Schaltern 27 wird eine sogenannte "Sub-Network-Connection-Protection" erreicht, die auch als SNCP abgekürzt wird. In den Knoten 20 der Ringe 11, 13 sind ebenfalls derartige Schalter 27 zum Zwecke der SNCP enthalten.

Die Schalter 27 werden von dem Steuergerät angesteuert. Bei dem Steuergerät kann es sich um ein Rechengerät handeln, das in Abhängigkeit von einem Programm die einzelnen Schalter 27 in die erwünschten Schaltstellungen umschaltet.

Die Schalter 27 werden von dem Steuergerät immer derart hin- und hergeschaltet, daß die bessere ankommende Verbindung durchgeschaltet wird. Dies bedeutet, daß das Steuergerät die beiden an einem Schalter 27 ankommenden Verbindungen hinsichtlich ihrer Qualität überprüft, und daß das Steuergerät dann diejenige ankommende Verbindung zu der abgehenden Verbindung durchschaltet, die die bessere Qualität aufweist. Liegt bei einer der beiden ankommenden Verbindungen z.B. eine Unterbrechung oder ein anderer Defekt vor, so wird dies von dem Steuergerät erkannt, und es wird dann von dem Steuergerät die andere, bessere Verbindung zur Weiterschaltung ausgewählt. Auf diese Weise ist es möglich, einen vorhandenen Fehler in dem Datenübertragungsnetzwerk 10 zu beheben.

Die Ansteuerung der Schalter 27 erfolgt somit derart, daß die Verbindungen auch dann bestehen bleiben, wenn entweder ein Kabel zwischen zwei der Knoten 14, 15, 16 defekt ist und die damit über dieses Kabel realisierten Verbindungen nicht mehr vorhanden sind, oder wenn einer der Knoten 14, 15, 16 defekt ist und damit über diesen Knoten keine logischen Verbindungen mehr realisierbar sind.

Dies soll anhand der Figuren 2 und 3 an dem folgenden Beispiel erläutert werden. Bei dem Beispiel soll eine Verbindung von einem Startpunkt A zu einem Endpunkt B hergestellt werden.

Nach dem Startpunkt A teilt sich die Verbindung in eine Verbindung zu der Schalteinrichtung 23 sowie eine dazu parallele Verbindung zu der Schalteinrichtung 25 auf, und zwar jeweils zu einem der beiden umschaltbaren Anschlußpunkte der Schalter 27. Von dort ist jeweils eine Verbindung zu dem jeweils anderen umschaltbaren Anschlußpunkt des Schalters 27 der anderen Schalteinrichtung 25, 23 vorhanden. Der jeweilige gemeinsame Anschlußpunkt der Schalter 27 der beiden Schalteinrichtungen 23, 25 ist dann über über zwei parallele Verbindungen zu dem Endpunkt B geführt und dort wieder vereinigt.

Eine erste Möglichkeit der Verbindung von A nach B besteht damit über die Verbindungen 21a, 21b. Der Schalter 27 der Schalteinrichtung 25 ist dabei in seine nicht-dargestellte Schaltstellung geschaltet.

Es sei nun angenommen, daß die Verbindung 21a unterbrochen ist, die Verbindung 21b in Ordnung ist, und die Schalteinrichtungen 23, 24, 25, 26 auch in Ordnung sind. In diesem Fall besteht eine Möglichkeit der Verbindung von A nach B über die Verbindungen 21c, 21b. Der Schalter der Schalteinrichtung 25 ist dabei in seine dargestellte Schaltstellung geschaltet.

Es sei angenommen, daß die Verbindung 21b unterbrochen ist, die Verbindung 21a aber in Ordnung ist. Dann besteht die Möglichkeit der Verbindung von A nach B über die Verbindungen 21a, 21d. Der Schalter 27 der Schalteinrichtung 23 ist dabei in seine dargestellte Schaltstellung geschaltet.

Schließlich sei angenommen, daß beide Verbindungen 21a, 21b unterbrochen sind. In diesem Fall besteht die Möglichkeit der Verbindung von A nach B über die Verbindungen 21c, 21d. Der Schalter 27 der Schalteinrichtung 23 ist dabei in seine nicht-dargestellte Schaltstellung geschaltet.

Der Schalter 27 des Knotens 20 ist dabei immer derart geschaltet, daß die Verbindung von A nach B vollständig entsteht.

Die vorstehenden Annahmen von Unterbrechungen können beliebig fortgesetzt werden, wobei in allen Fällen die Unterbrechung einer einzigen der Verbindungen 21a, 21b, 21c, 21d durch entsprechende Umschaltungen der Schalteinrichtungen 23, 24, 25, 26 wieder aufgehoben werden kann.

Es sei nunmehr angenommen, daß die Verbindungen 21a, 21b, 21c, 21d nicht unterbrochen sind, daß aber die Schalteinrichtung 25 defekt ist. In diesem Fall besteht die Möglichkeit der Verbindung von A nach B über die Verbindungen 21c, 21d. Der Schalter 27 der Schalteinrichtung 23 ist dabei in seine nicht-dargestellte Schaltstellung geschaltet.

Weiterhin sei angenommen, daß nunmehr die Schalteinrichtung 23 defekt ist. Dann besteht eine Möglichkeit der Verbindung von A nach B über die Verbindungen 21a, 21b. Der Schalter 27 der Schalteinrichtung 25 ist dabei in seine nicht-dargestellte Schaltstellung geschaltet.

Diese Annahmen von Defekten können beliebig fortgesetzt werden, wobei in allen Fällen der Defekt einer einzigen Schalteinrichtung 23, 24, 25, 26 durch entsprechende Umschaltungen der anderen Schalteinrichtungen 23, 24, 25, 26 wieder aufgehoben werden kann.

Entsprechendes gilt auch für die Gegenrichtung, also für eine Verbindung von einem Punkt C zu einem Punkt D.

Das Steuergerät, mit dem die Schalteinrichtungen 23, 24, 25, 26 gesteuert werden, ist in der Lage zu erkennen, ob eine Verbindung hergestellt werden soll, die sich über drei Ringe 11, 12, 13 erstreckt, und bei der alle drei Ringe 11, 12, 13 über einen zentralen Knoten 14 miteinander gekoppelt werden können.

Die vorstehende Situation stellt immer eine Verbindung "übers Eck" dar, bei der also nicht nur aufeinanderfolgende Ringe "in einer Richtung" miteinander verbunden werden sollen, sondern bei der mehrere Ringe "in verschiedene Richtungen" miteinander verbunden werden sollen.

Sobald das Steuergerät diese Situation erkannt hat, steuert das Steuergerät die Schalteinrichtungen 23, 24, 25, 26 sowie die genannten Schaltmatrizen derart an, daß eine der in dem Beispiel beschriebenen Möglichkeiten einer Verbindung entsteht. Die Schalteinrichtungen 23, 24, 25, 26 werden dabei untereinander und mit den Eingangs- oder Ausgangskarten 18 über die von dem Steuergerät konfigurierbaren Schaltmatrizen verbunden. Von dem Steuergerät werden also die Verbindungen über alle drei Ringe gleichzeitig beeinflußt.

In dem beschriebenen Beispiel werden die Schalteinrichtungen 23, 24, 25, 26 gleichzeitig derart von dem Steuergerät angesteuert, daß sich jeder der beiden äußeren Ringe 11, 13 über den mittleren Ring 12 zu dem jeweils anderen äußeren Ring 13, 11 erstreckt. Damit ist immer nur eine der beiden Schalteinrichtungen 23, 25 des zentralen Knotens 14 erforderlich, um eine Verbindung von einem der beiden äußeren Ringe 11, 13 über den mittleren Ring zu dem anderen äußeren Ring 13, 11 herzustellen.

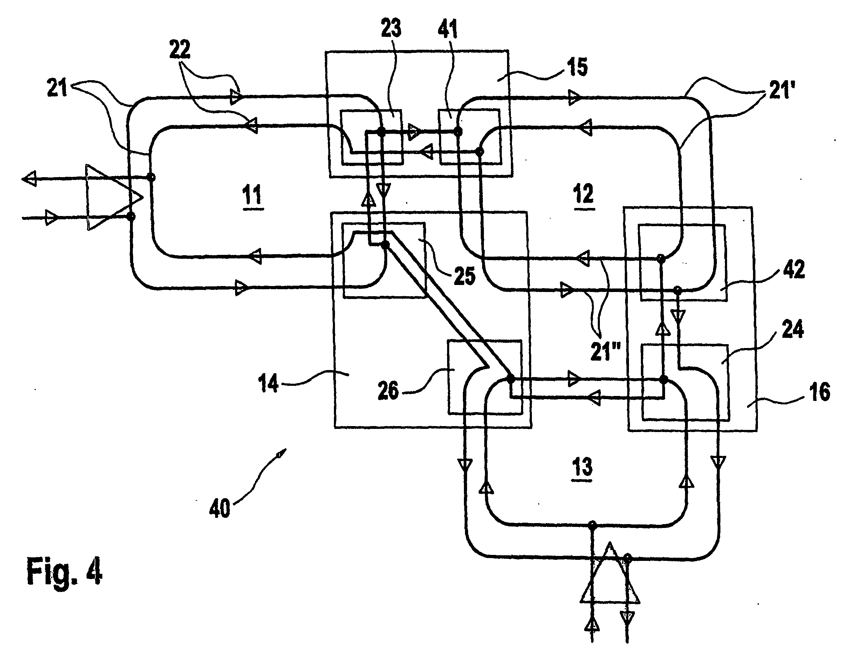

In der Figur 4 ist ein Datenübertragungsnetzwerk 40 dargestellt, das weitgehend dem Datenübertragungsnetzwerk 10 der Figuren 1 bis 3 entspricht. Gleichlautende Merkmale sind deshalb mit gleichen Bezugszeichen gekennzeichnet.

Im Unterschied zu Figur 1 weist das Datenübertragungsnetzwerk 40 der Figur 4 innerhalb des mittleren Rings 12 eine Erweiterung auf. Dort sind die beiden Verbindungen 21 nicht in einfacher Weise wie in der Figur 1 hergestellt, sondern die Verbindungen 21 sind über jeweils zwei zueinander parallele Verbindungen 21', 21'' realisiert. An den Verzweigungen in die Verbindungen 21', 21'' sind Schaltungen 41, 42 vorgesehen, die jeweils einerseits eine Verteilung und andererseits eine Zusammenführung von Verbindungen durchführen können. Die Verteilung wird dabei auch als "Broadcast-Funktion" bezeichnet, und die Zusammenführung wird mittels der bereits erwähnten SNCP's durchgeführt. Die Schalter der SNCP's werden dabei von dem Steuergerät in die jeweils erforderliche Stellung geschaltet.

In der Figur 4 ist es damit in Ergänzung zur Figur 1 möglich, bei einer Unterbrechung z.B. der Verbindungen 21' mit Hilfe einer Umschaltung der Schalter der Schaltungen 41, 42 auf die Verbindungen 21'' die Unterbrechung wieder aufzuheben.

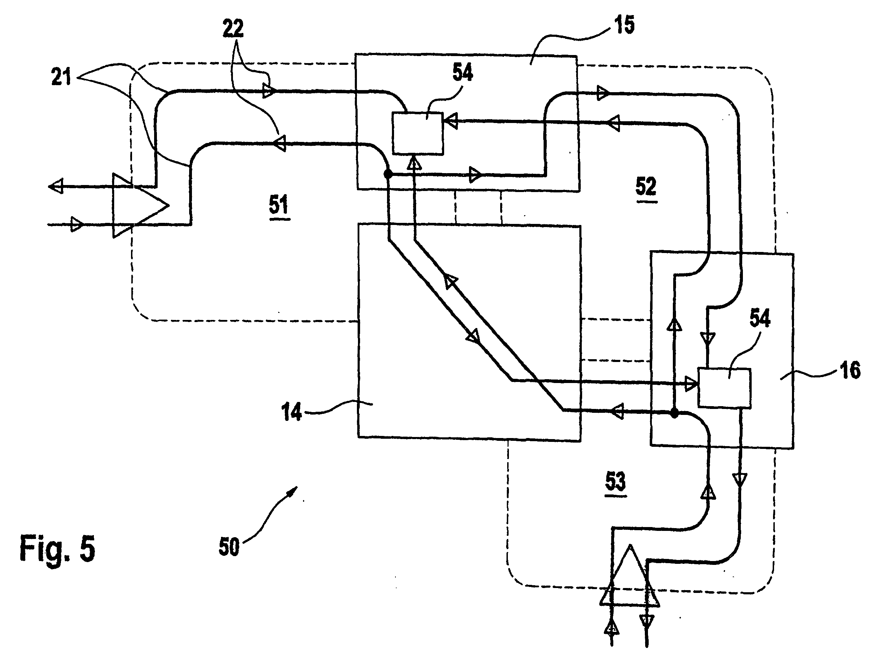

In der Figur 5 ist ein Datenübertragungsnetzwerk 50 dargestellt, das weitgehend dem Datenübertragungsnetzwerk 10 der Figuren 1 bis 3 entspricht. Gleichlautende Merkmale sind deshalb mit gleichen Bezugszeichen gekennzeichnet.

Anstelle der Ringe 11, 12, 13 der Figuren 1 bis 3 sind bei dem Datenübertragungsnetzwerk 50 der Figur 5 sogenannte Shared-Protection-Ring-Verbindungen 51, 52, 53 vorhanden. Dabei handelt es sich um Verbindungen 51, 52, 53 zwischen den Knoten 14, 15, 16, bei denen das Shared-Protection-Ring-Verfahren zur Fehlerbehebung verwendet wird. Bei SDH/SONET-Netzwerken wird dieses Verfahren als sogenanntes MS-SPRING-Verfahren implementiert. Bei derartigen Shared-Protection-Ringen wird die zur Verfügung stehende Schutzkapazität von einem oder mehreren zu schützenden Signalen geteilt.

Weiterhin sind in den Knoten 14, 15, 16 anstelle der Schalteinrichtungen 23, 24, 25, 26 der Figuren 1 bis 3 und insbesondere der dort enthaltenen SNCP's bei dem Datenübertragungsnetzwerk 50 der Figur 5 Selektoren 54 vorhanden. Die Selektoren 54 sind dabei nur in den beiden Knoten 15, 16 erforderlich, nicht jedoch in dem zentralen Knoten 14. Dieser Knoten 14 enthält keine Schalter oder dergleichen.

Die beiden Selektoren 54 wählen jeweils die bessere der beiden ankommenden Verbindungen aus und schalten diese weiter. Die Selektoren 54 der Figur 5 entsprechen damit funktional den Schalteinrichtungen 23, 24, 25, 26 der Figuren 1 bis 3.

In Abänderung der Figur 5 ist es möglich, daß nicht alle drei Verbindungen 51, 52, 53 als Shared-Protection-Ring-Verfahren vorhanden sind, sondern nur die beiden äußeren Verbindungen 51, 53. Die mittlere, zentrale Verbindung 52 kann also auch ohne das Shared-Protection-Ring-Verfahren realisiert sein.

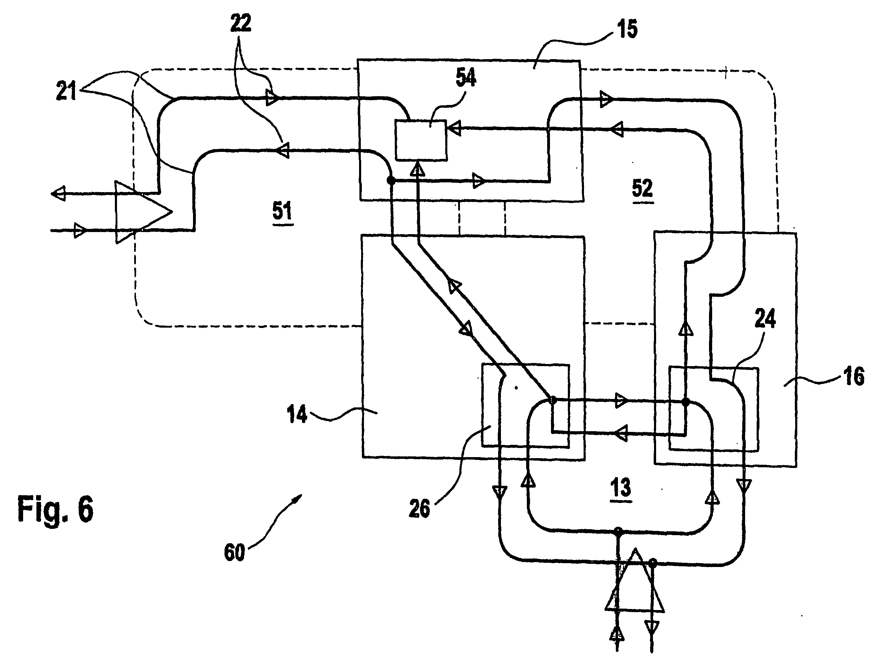

In der Figur 6 ist ein Datenübertragungsnetzwerk 60 dargestellt, das weitgehend dem Datenübertragungsnetzwerk 50 der Figur 5 entspricht. Gleichlautende Merkmale sind deshalb mit gleichen Bezugszeichen gekennzeichnet.

Anstelle einer der beiden äußeren Shared-Protection-Ring-Verbindungen 53 der Figur 5 ist bei dem Datenübertragungsnetzwerk 60 der Figur 6 jedoch der Ring 13 beispielsweise aus den Figuren 1 bis 3 vorhanden. Der Ring 13 enthält dabei zur Fehlerbehebung, wie bereits erläutert wurde, entsprechende SNCP's. Dieser Ring 13 ist dann über die Schalteinrichtungen 26, 24 in den Knoten 14, 16 mit den Shared-Protection-Ring-Verbindungen 51, 52 bzw. dem Selektor 54 des Knotens 15 gekoppelt.

## Patentansprüche

1. Verfahren zum Betreiben eines Datenübertragungsnetzwerks (10, 40, 50, 60), das mindestens zwei äußere Ringe (11, 13) und einen mittleren Ring (12) aufweist, die über Knoten (14, 15, 16) miteinander gekoppelt sind, wobei einer der Knoten (14) einen zentralen Knoten für alle drei Ringe (11, 12, 13) darstellt, und wobei in jedem der Knoten (14, 15, 16) Schalteinrichtungen (23, 24, 25, 26) zur Herstellung von Verbindungen enthalten sind, **dadurch gekennzeichnet, dass** erkannt wird, dass eine Verbindung von dem einen äußeren Ring (11, 13) über den mittleren Ring (12) zu dem anderen äußeren Ring (13, 11) hergestellt werden soll, und dass die Verbindung unter Berücksichtigung aller drei Ringe (11, 12, 13) wie folgt hergestellt wird:
- in einem Startpunkt (A) wird die Verbindung in zwei parallele Verbindungen (21a, 21c) aufgeteilt und über einen der beiden äußeren Ringe (11) geführt,
- eine der beiden parallelen Verbindungen wird direkt über den zentralen Knoten (14) zu dem anderen äußeren Ring (13) geführt,
- die andere der beiden parallelen Verbindungen wird über den mittleren Ring (12) zu dem anderen äußeren Ring (13) geführt,
- in einem Endpunkt (B) werden die beiden parallelen Verbindungen wieder vereint.

2. Verfahren nach Anspruch 1, **dadurch gekennzeichnet, dass** der zentrale Knoten (14) zwei Schalteinrichtungen (25, 26) aufweist, und dass die über den zentralen Knoten (14) geführte Verbindung über eine der beiden Schalteinrichtungen (25, 26) des zentralen Knotens (14) hergestellt wird.

3. Verfahren nach einem der Ansprüche 1 oder 2, **dadurch gekennzeichnet, dass** der mittlere Ring (12) zwei zueinander parallele Verbindungen (21', 21'') aufweist, und dass die Verbindung über eine der beiden parallelen Verbindungen (21', 21'') hergestellt wird.

4. Verfahren nach einem der Ansprüche 1 bis 3, **dadurch gekennzeichnet, dass** mindestens einer der Ringe (11, 12, 13) als Shared-Protection-Ring-Verbindung (51, 52, 53) ausgebildet wird.

5. Verfahren nach Anspruch 4, **dadurch gekennzeichnet, dass** mindestens ein Ring (13) und mindestens eine Shared-Protection-Ring-Verbindung (51, 52) miteinander kombiniert werden.

6. Steuergerät zur Steuerung eines Datenübertragungsnetzwerks (10, 40, 50, 60), wobei das Datenübertragungsnetzwerk (10, 40, 50, 60) mindestens zwei äußere Ringe (11, 13) und einen mittleren Ring (12) aufweist, die über Knoten (14, 15, 16) miteinander gekoppelt sind, wobei einer der Knoten (14) einen zentralen Knoten für alle drei Ringe (11, 12, 13) darstellt, und wobei in jedem der Knoten (14, 15, 16) Schalteinrichtungen (23, 24, 25, 26) zur Herstellung von Verbindungen enthalten sind, **dadurch gekennzeichnet, dass** das Steuergerät dazu programmiert ist, zu erkennen, dass eine Verbindung von dem einen äußeren Ring (11, 13) über den mittleren Ring (12) zu dem anderen äußeren Ring (13, 11) hergestellt werden soll, und dass das Steuergerät zur folgenden Herstellung der Verbindung unter Berücksichtigung aller drei Ringe (11, 12, 13) programmiert ist:
- in einem Startpunkt (A) wird die Verbindung in zwei parallele Verbindungen (21a, 21c) aufgeteilt und über einen der beiden äußeren Ringe (11) geführt,
- eine der beiden parallelen Verbindungen wird direkt über den zentralen Knoten (14) zu dem anderen äußeren Ring (13) geführt,
- die andere der beiden parallelen Verbindungen wird über den mittleren Ring (12) zu dem anderen äußeren Ring (13) geführt,
- in einem Endpunkt (B) werden die beiden parallelen Verbindungen wieder vereint.

## Claims

1. Method of operating a data transmission network (10, 40, 50, 60), which has at least two outer rings (11, 13) and a middle ring (12), which are coupled to one another via nodes (14, 15, 16), one of the nodes (14) being a central node for all three rings (11, 12, 13), and each of the nodes (14, 15, 16) containing switching devices (23, 24, 25, 26) for setting up connections, **characterized in that** it is recognized that a connection is to be established from the one outer ring (11, 13) via the middle ring (12) to the other outer ring (13, 11), and that the connection is established taking into account all three rings (11, 12, 13) as follows:
- in a starting point (A), the connection is divided into two parallel connections (21a, 21c) and run via one of the two outer rings (11),
- one of the two parallel connections is run directly via the central node (14) to the other outer ring (13),
- the other of the two parallel connections is run via the middle ring (12) to the other outer ring (13),
- the two parallel connections are united again in an end point (B).

2. Method according to Claim 1, **characterized in that** the central node (14) has two switching devices (25, 26), and that the connection guided over the central node (14) is established via one of the two switching devices (25, 26) of the central node (14).

3. Method according to one of claims 1 or 2, **characterized in that** the middle ring (12) has two connections (21', 21") parallel to each other, and that the connection is established over one of the two parallel connections (21', 21").

4. Method according to one of claims 1 to 3, **characterized in that** at least one of the rings (11, 12, 13) is configured as a shared protection ring connection (51, 52, 53).

5. Method according to Claim 4, **characterized in that** at least one ring (13) and at least one shared protection ring connection (51, 52) are combined with each other.

6. Control device for controlling a data transmission network (10, 40, 50, 60), the data transmission network (10, 40, 50, 60) having at least two outer rings (11, 13) and a middle ring (12), which are coupled with one another via nodes (14, 15, 16), one of the nodes (14) being a central node for all three rings (11, 12, 13), and each of the nodes (14, 15, 16) containing switching devices (23, 24, 25, 26) for setting up connections, **characterized in that** the control device is programmed to recognize that a connection is to be established from the one outer ring (11, 13) via the middle ring (12) to the other outer ring (13, 11), and that the control device is programmed for the following setup of the connection, taking into account all three rings (11, 12, 13) :
- in a starting point (A), the connection is divided into two parallel connections (21a, 21c) and run via one of the two outer rings (11),
- one of the two parallel connections is run directly via the central node (14) to the other outer ring (13),
- the other of the two parallel connections is run via the middle ring (12) to the other outer ring (13),
- the two parallel connections are united again in an end point (B).

## Revendications

1. Procédé pour exploiter un réseau de transmission de données (10, 40, 50, 60) qui présente au moins deux anneaux extérieurs (11, 13) et un anneau central (12) qui sont connectés entre eux par le biais de noeuds (14, 15, 16), l'un des noeuds (14) représentant un noeud central pour les trois anneaux (11, 12, 13) et des dispositifs de commutation (23, 24, 25, 26) destinés à établir des liaisons étant inclus dans chacun des noeuds (14, 15, 16), **caractérisé en ce qu'**une liaison doit être établie de l'un des anneaux extérieurs (11, 13) vers l'autre anneau extérieur (13, 11) par le biais de l'anneau central (12) et que la liaison, en tenant compte des trois anneaux (11, 12, 13), est établie comme suit :
- en un point de départ (A), la liaison est divisée en deux liaisons parallèles (21a, 21c) et acheminée sur l'un des deux anneaux extérieurs (11),
- l'une des deux liaisons parallèles est acheminée à l'autre anneau extérieur (13) directement par le biais du noeud central (14),
- l'autre des deux liaisons parallèles est acheminée à l'autre anneau extérieur (13) par le biais de l'anneau central (12),
- les deux liaisons parallèles sont de nouveau réunies en un point final (B).

2. Procédé selon la revendication 1, **caractérisé en ce que** le noeud central (14) présente deux dispositifs de commutation (25, 26) et que la liaison passant par le noeud central (14) est établie par le biais de l'un des deux dispositifs de commutation (25, 26) du noeud central (14).

3. Procédé selon l'une des revendications 1 ou 2, **caractérisé en ce que** l'anneau central (12) présente deux liaisons parallèles l'une à l'autre (21', 21 ") et que la liaison est établie par le biais de l'une des deux liaisons parallèles (21', 21").

4. Procédé selon l'une des revendications 1 à 3, **caractérisé en ce qu'**au moins l'un des anneaux (11, 12, 13) est réalisé sous la forme d'une liaison par anneau à protection partagée (51, 52, 53).

5. Procédé selon la revendication 4, **caractérisé en ce qu'**au moins un anneau (13) et au moins une liaison par anneau à protection partagée (51, 52) peuvent être combinés entre eux.

6. Module de commande pour commander un réseau de transmission de données (10, 40, 50, 60), le réseau de transmission de données (10, 40, 50, 60) présentant au moins deux anneaux extérieurs (11, 13) et un anneau central (12) qui sont connectés entre eux par le biais de noeuds (14, 15, 16), l'un des noeuds (14) représentant un noeud central pour les trois anneaux (11, 12, 13) et des dispositifs de commutation (23, 24, 25, 26) destinés à établir des liaisons étant inclus dans chacun des noeuds (14, 15, 16), **caractérisé en ce que** le module de commande est programmé pour détecter qu'une liaison doit être établie de l'un des anneaux extérieurs (11, 13) vers l'autre anneau extérieur (13, 11) par le biais de l'anneau central (12) et que le module de commande est programmé pour établir la liaison de la manière suivante en tenant compte des trois anneaux (11, 12, 13) :
- en un point de départ (A), la liaison est divisée en deux liaisons parallèles (21a, 21c) et acheminée sur l'un des deux anneaux extérieurs (11),
- l'une des deux liaisons parallèles est acheminée à l'autre anneau extérieur (13) directement par le biais du noeud central (14),
- l'autre des deux liaisons parallèles est acheminée à l'autre anneau extérieur (13) par le biais de l'anneau central (12),
- les deux liaisons parallèles sont de nouveau réunies en un point final (B).
